# EUROPÄISCHE PATENTSCHRIFT

(11) **EP 2 036 636 B1**
(45) Veröffentlichungstag und Bekanntmachung des Hinweises auf die Patenterteilung: **20.06.2012**
(21) Anmeldenummer: 08016039.3
(22) Anmeldetag: 11.09.2008
(51) Int. Cl.: B23B 3/16, B23B 29/32

(54) **Werkzeugaufnahmekopf für eine Drehmaschine**
Tool holding head for a lathe
Tête raccordement d'outil pour un tour

(30) Priorität: 14.09.2007 IT MI20071770
(43) Veröffentlichungstag der Anmeldung: 18.03.2009
(73) Patentinhaber: Gildemeister Italiana S.p.A., 24030 Brembate Sopra (IT)
(72) Erfinder: Rigolone, Franco, 24010 Ponteranica (IT); Rota, Renato, 24030 Carvico (IT); Gervasoni, Oscar, 24123 Bergamo (IT)
(74) Vertreter: Mayer, Hans Benno

(56) Entgegenhaltungen:
- DE-A1- 3 702 424
- DE-A1- 3 930 154
- DE-A1- 4 320 019
- DE-U1- 8 712 581

## Beschreibung

Die vorstehende Erfindung betrifft einen Werkzeugaufnahmekopf für eine Drehmaschine, insbesondere für eine Mehrspindeldrehmaschine.

Es ist bekannt, dass in Mehrspindeldrehmaschinen Werkzeugaufnahmeköpfe zum Einsatz gelangen, die feststehende Werkzeuge für die Bearbeitung des Werkstückes aufnehmen.

Die bekannten Werkzeugaufnahmeköpfe sind verschiebbar unter Zuhilfenahme von Schwalbenschwanzführungen gelagert.

Desweiteren sind Werkzeugaufnahmeköpfe bekannt geworden, welche sich drehende Werkzeuge aufnehmen, z.B. Bohr- oder Fräswerkzeuge.

Die Tatsache, dass der Werkzeugaufnahmekopf feststehende sowie sich drehende Werkzeuge aufnimmt, bedingt es, zwei unterschiedliche Antriebsvorrichtungen bzw. Arretiervorrichtungen vorzusehen, was einen erheblichen Platzbedarf in der Werkzeugmaschine mit sich bringt.

Mit Zunahme an Werkzeugaufnahmeköpfen, ergibt sich nicht nur ein erhöhter Platzbedarf für deren Montage, es ist auch ein größerer Zeitaufwand sowie der Einsatz von Fachkräften für die Montage bzw. die Demontage der unterschiedlichen Werkzeugeinheiten erforderlich.

Diese Tatsache senkt in erheblicher Weise den Wirkungsgrad der Werkzeugmaschine.

Aus DE-A-3702424 ist ein Werkzeugrevolver für eine Werkzeugmaschine, insbesondere eine Drehmaschine, bekannt geworden. Dort ist ein Antriebsmotor mit einer ersten Drehachse vorgesehen, der auf eine zweite Welle einwirkt, deren Achse in einer zweiten Ebene angeordnet ist und über ein Zahnrad auf eine dritte Antriebswelle zum Antrieb eines Werkzeuges einwirkt, das über ein Winkeltrieb um eine vierte Achse drehbar ist.

Die Vorsehung mehrerer Drehachsen führt bei dieser Ausführungsform (in der Summe zu erheblichen) Lagerspielen, und zu einer Vergrößerung der Abmessungen dieser bekannten Vorrichtung. Ferner sind bei dem bekannten Werkzeugrevolver für eine Werkzeugmaschine keine Einstellvorgänge (Presetting) außerhalb der Maschine möglich.

Es ist daher Aufgabe der vorstehenden Erfindung, die Nachteile des Standes der Technik zu vermeiden und einen Werkzeugaufnahmekopf vorzuschlagen, der auf einem bekannten Kreuzschlitten einer Werkzeugmaschine montierbar ist, insbesondere einer Mehrspindeldrehmaschine, der verminderte Abmessungen aufweist und die Möglichkeit bietet, rasch unterschiedliche Werkzeugaufnahmeköpfe zu montieren, wobei diese Werkzeugaufnahemköpfe vormontierbar und außerhalb der Maschine einstellbar sind und ferner die Montage von feststehenden Werkzeugen sowie die Montage von einem oder mehreren sich drehenden Werkzeugen ermöglicht. Desweiteren soll die Möglichkeit eröffnet werden, auf rasche Weise von einer Werkzeugart auf eine andere Werkzeugart umzurüsten, und die Möglichkeit zu schaffen, Bohrungen in Achse sowie außerachsig gegenüber dem Werkzeug anzubringen.

Die erfindungsgemäße Aufgabe wird mit einem Werkzeugaufnahmekopf für eine Drehmaschine gemäß Anspruch 1 gelöst.

Die erfindungsgemäße Einrichtung wird nun genauer beschrieben, unter Bezugnahme auf die beigefügten Zeichnungen.

### Es zeigen:

Figur 1 in schematischer Ansicht einen ersten Werkzeugaufnahmekopf mit einer Werkzeugaufnahme;
Figur 2 einen zweiten Werkzeugaufnahmekopf mit einer Werkzeugaufnahme;
Figur 3 den erfindungsgemäßen Werkzeugaufnahmekopf im Längsschnitt;
Figur 4 den Werkzeugaufnahmekopf im Längsschnitt, ausgerüstet mit einer Vielzahl von Werkzeugen;
Figur 5 den Werkzeugaufnahmekopf ausgerüstet mit einem Bohrwerkzeug;
Figur 6 den Werkzeugaufnahmekopf, ausgerüstet mit einem Werkzeug mit größerem Durchmesser, zum Bohren und Fräsen;
Figur 7 den Werkzeugaufnahmekopf im Schnitt während der Durchführung eines Bohrvorganges, in Achse mit dem Werkstück;
Figur 8 in Vorderansicht die Einrichtung für die Lageanordnung des Werkzeuges zur Durchführung einer Bohrung radial versetzt zur Längsachse des Werkstückes;
Figur 9 schematisch in Vorderansicht die Positioniereinrichtung des Werkzeuges zur Durchführung einer radial zur Achse versetzten Bohrung;
Figur 10 im Schnitt die Vorrichtung gemäß Figur 8 und 9.

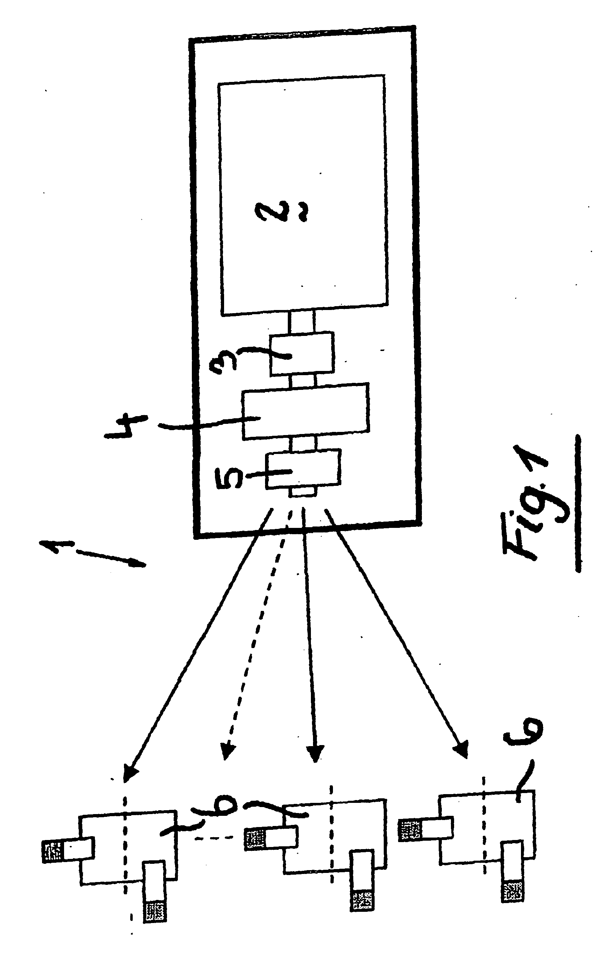

Wie der schematischen Zeichnung gemäß Figur 1 zu entnehmen ist, weist der Werkzeugaufnahmekopf 1 einen steuerbaren Motor 2 auf, dessen Antriebswelle ein Verbindungsstück 3, einen Schnellanschluss 4 sowie eine hydraulische Bremse 5 aufweist. Der Werkzeugaufnahmekopf 1 ist mit einer Vielzahl von Werkzeugen ausgerüstet.

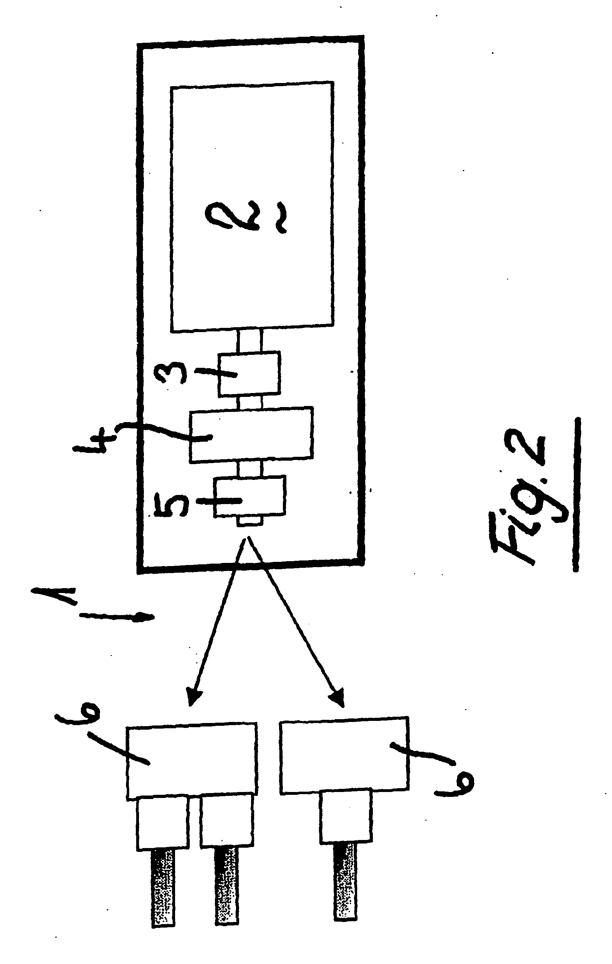

Eine weitere Ausführungsform des Werkzeugaufnahmekopfes ist in Figur 2 dargestellt, auch hier ist ein Motor 2, ein Verbindungsstück 3, ein Schnellanschluss 4 sowie eine hydraulische Bremse 5 vorgesehen, die in diesem Fall Werkzeuggruppen antreiben.

Wenn sich die fest angeordneten Werkzeuge in Arbeitsstellung befinden, erfolgt ein Betätigen der hydraulischen Bremse 5, um die Werkzeuge in einer bestimmten Arbeitsstellung zu arretieren. Ist hingegen eine Anzahl von sich drehenden Werkzeugen vorgesehen, so ist die Bremse 5 gelöst.

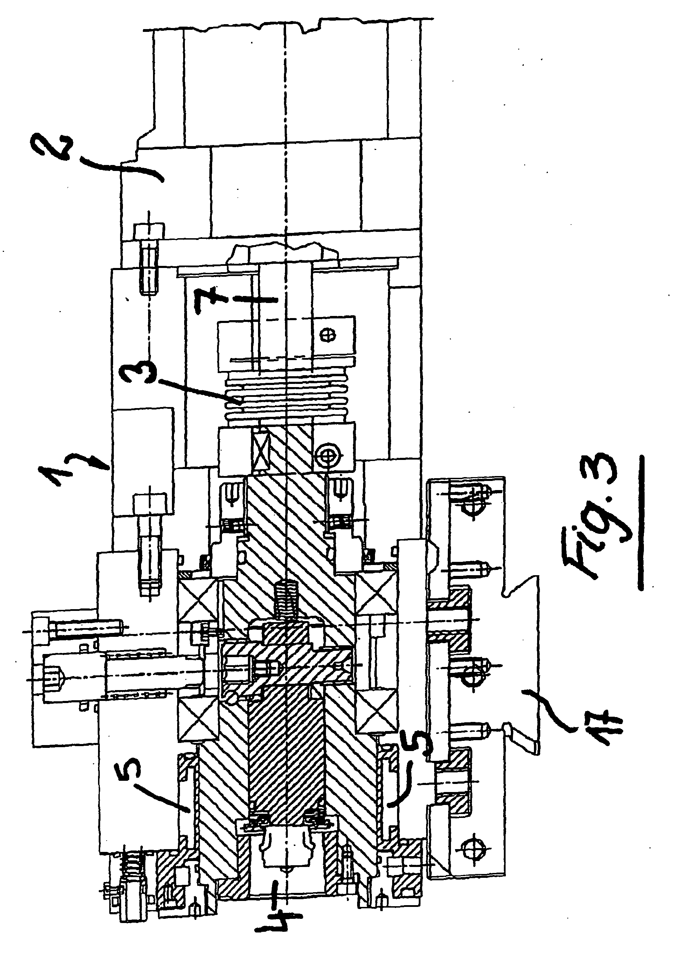

Der Figur 3 kann im Schnitt im Detail der Antriebsmotor 2 entnommen werden, dessen Antriebswelle 7, über ein Kupplungsstück 3 und den Schnellanschluss 4, ein Werkzeug (nicht dargestellt in Figur 3) in Drehbewegung versetzt.

Der Schnellanschluss ist aus dem Stand der Technik bekannt.

Dank der Vorsehung einer hydraulischen Bremse 5 kann der Werkzeugaufnahmekopf 1 in jeder gewünschten Lage arretiert werden.

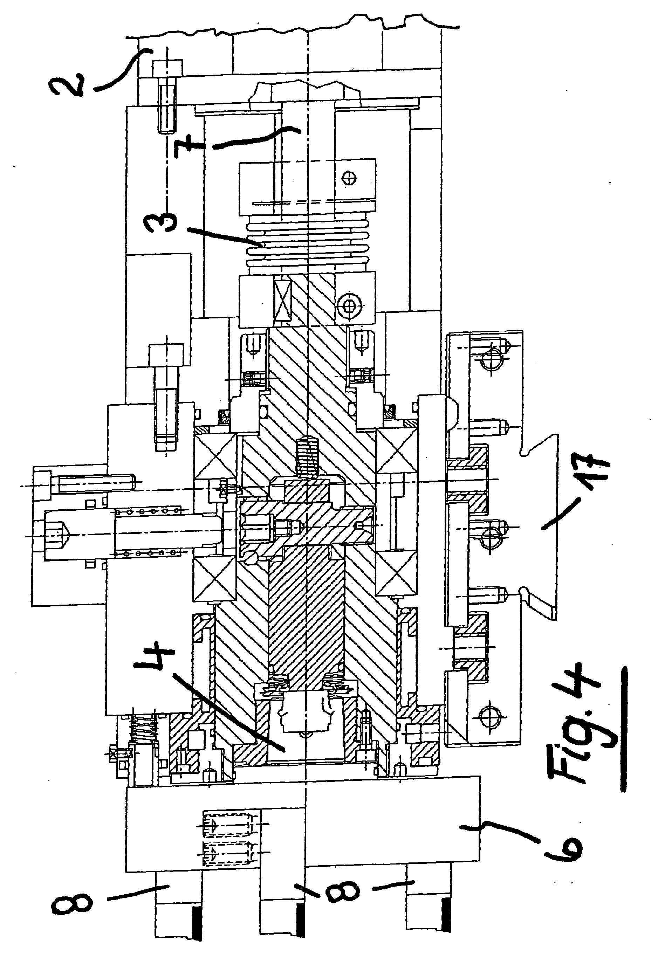

Der Figur 4 kann der Antriebsmotor 2 mit der dazugehörenden Antriebswelle 7 entnommen werden; der Antriebsmotor 2 treibt über ein Verbindungsstück 3 den Schnellanschluss 4 an, welcher gemäß Figur 4 eine Aufnahme 6 aufweist, die mit zahlreichen feststehenden Werkzeugen 8 zur Durchführung von Dreharbeiten ausgerüstet ist.

Somit wird es ermöglicht, dass der Werkzeugaufnahmekopf 1 eine scheibenartige Werkzeugaufnahme aufnimmt, auf der zahlreiche fest angeordnete Werkstücke zur Durchführung von radialen und frontalen Bearbeitungsvorgängen angeordnet sind.

In diesem Fall wird der Motor 2 derartig angesteuert, dass eine Präzisionsbearbeitung des Werkstückes möglich wird, ferner erfolgt ein Werkzeugwechsel, wodurch das gewünschte Bearbeitungswerkzeug in Bearbeitungslage verfahren wird. Das Vorhandensein einer hydraulischen Bremse 5 erlaubt ein Arretieren des Revolverkopfes in sicherer und starrer Lage.

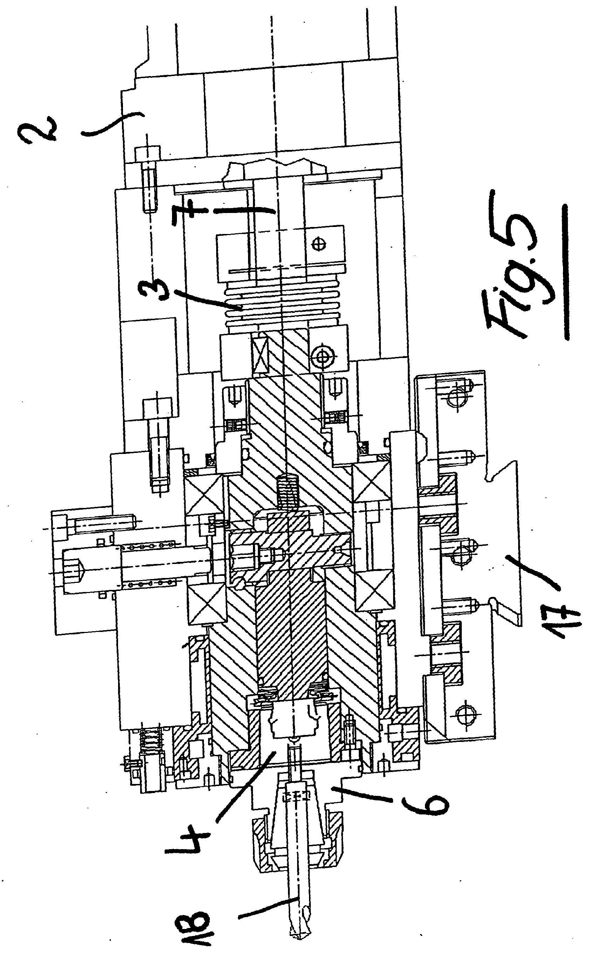

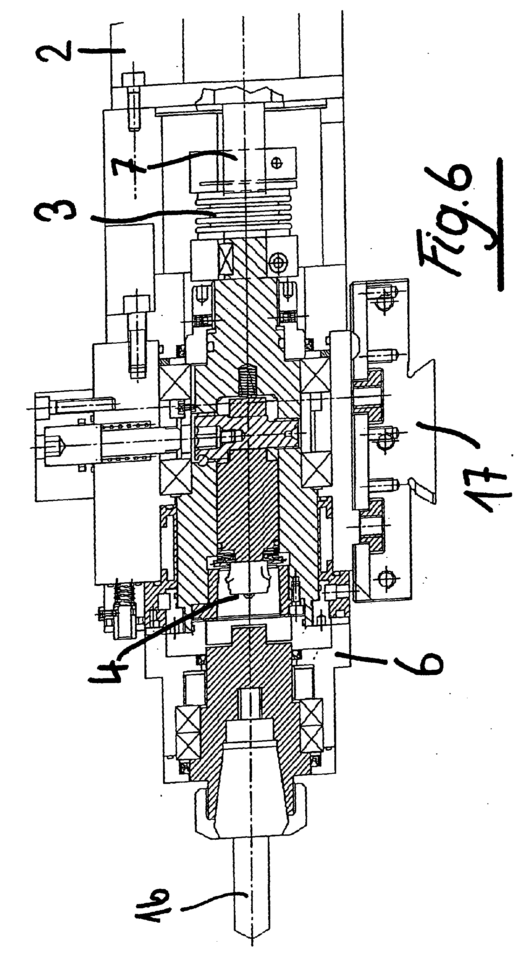

In dieser Lage wird durch die Vorrichtung die Funktion eines motorisch angetriebenen Schlittens erfüllt (siehe Figur 5 und 6).

Für diese Funktionsweise stehen zwei Gerätearten zur Verfügung:
- die erste Geräteart ist schematisch in Figur 5 zur Durchführung kleiner Bohrungen dargestellt;
- die zweite Geräteart entspricht der Darstellung nach Figur 6 und dient zur Durchführung von schweren Bearbeitungsvorgängen, wobei das Bohrwerkzeug über die Einrichtung 6 sowie die dazugehörenden Wälzlager aufgenommen wird.

In diesem Fall wird der Motor betätigt, um dem Werkzeug die notwendige Drehkraft zu vermitteln. Die hydraulische Bremse 5 ist entriegelt.

Der Figur 5 kann stets der Motor 2 mit der dazugehörigen Antriebswelle 7, dem Verbindungsstück 3 sowie dem Schnellanschluss 4 entnommen werden.

In der Darstellung gemäß Figur 5 weist die Aufnahme (6) eine Lagerung auf, die ein Bohrwerkzeug 18 aufweist, welches in Achse zum Motor 2 liegt.

In Figur 6 ist die Aufnahme 6 dargestellt und mit einem Werkzeug 16 mit größerem Durchmesser ausgerüstet, um Bohrungen oder Fräsvorgänge mit größerer Spanabnahme durchzuführen.

Den Figuren 3, 4, 5 und 6 kann entnommen werden, dass der Werkzeugaufnahmekopf 1 an seiner Unterseite einen Schlitten 17 in Schwalbenschwanzführung aufweist, um dadurch eine verschiebbare Lagerung im Körper der Werkzeugmaschine zu ermöglichen.

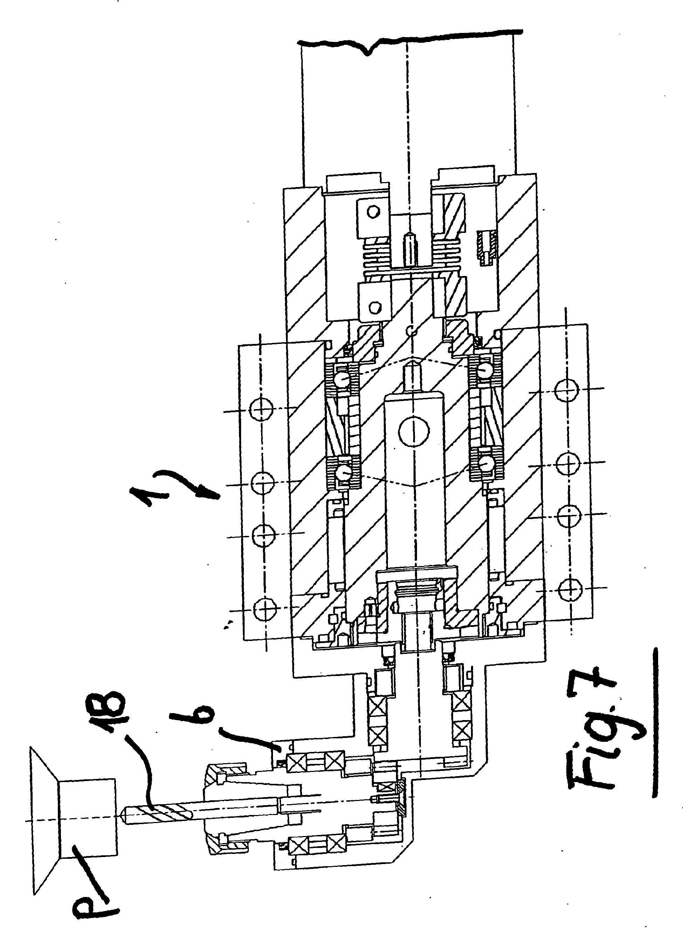

Figur 7 zeigt im Schnitt Teil des Werkzeugaufnahmekopfes, der zur Durchführung von einer um 90° umgelenkten Bohrung geeignet ist.

Durch diese Möglichkeit wird das mit 18 gekennzeichnete Werkzeug eingesetzt, um im Werkstück P Bohrungen in Achse durchzuführen.

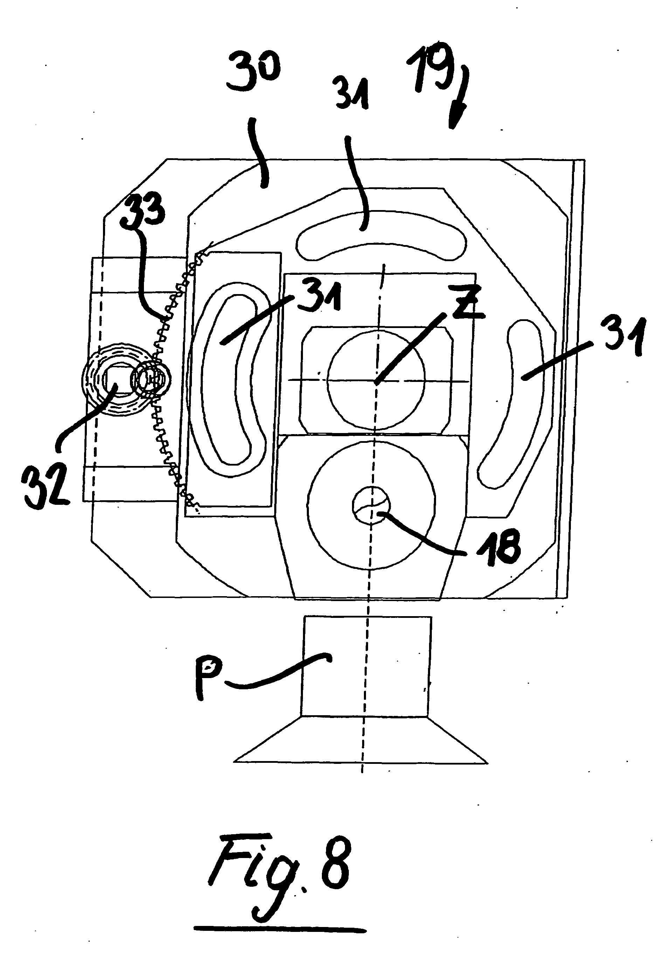

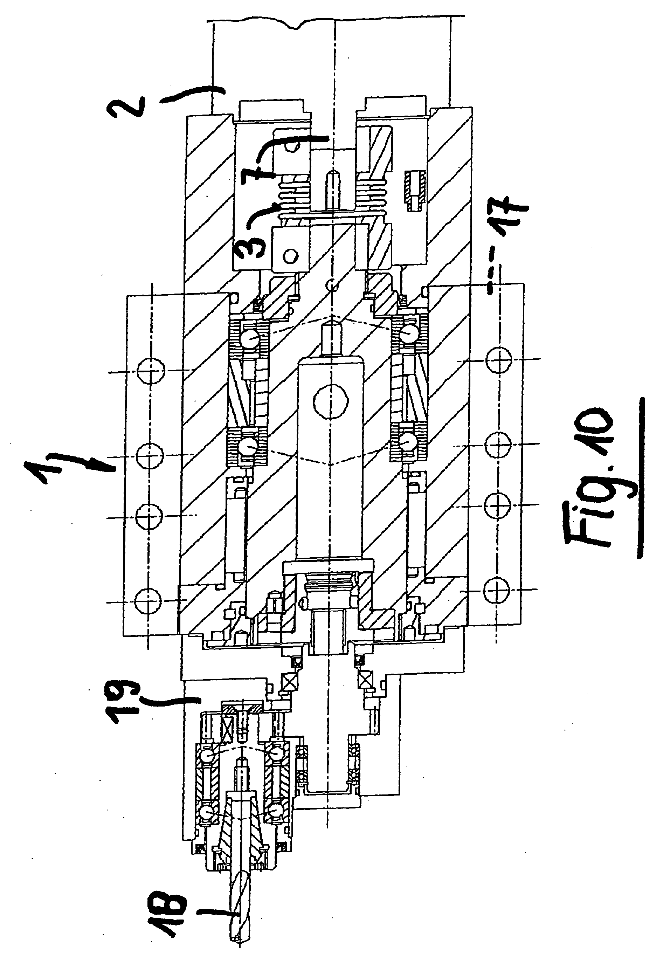

Unter Bezugnahme auf Figur 10 wird ersichtlich, dass die Werkzeuggruppe gemäß Figur 8 ein Verschwenken der Werkzeugaufnahmevorrichtung 19, zusammen mit dem Werkzeug 18, um die Achse Z ermöglicht.

Für die Lageanordnung des Werkzeuges 18 ist eine Platte 30 vorgesehen, die dazu dient, das Bohrwerkzeug 18 zu spannen.

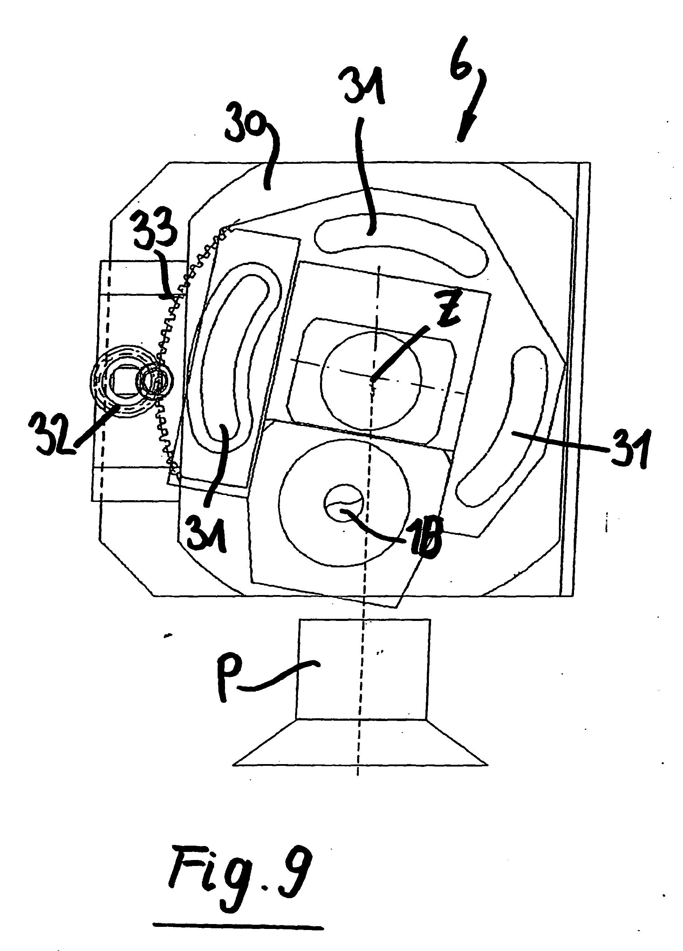

Die Platte 30 ist verschwenkbar und blockierbar durch Vorsehung von Langlöchern 31, die entlang einer Kreisbogenlinie angeordnet sind. Vor Einsatz des Bohrwerkzeuges 18 wird unter Zuhilfenahme eines geeigneten Schlüssels auf ein Zahnrad 32 eingewirkt, wodurch es ermöglicht wird, auf die Verzahnung 33 der Platte 30 einzuwirken und somit eine Lageanordnung des Bohrwerkzeuges 18 gegenüber dem Werkstück vorzunehmen. Figur 9 zeigt, dass dank einer Betätigung über die Vorrichtungen 32, 33 der Platte 30 eine Schwenkbewegung um die Achse Z ausgeführt wurde, wodurch das Bohrwerkzeug 18 nicht mehr in Achse mit dem Werkstück, sondern leicht nach links in der Zeichnung verschwenkt wurde, wodurch die Lage der durchzuführenden Bohrung außerhalb der Achse des Werkzeugstückes P zu liegen kommt.

In der in Figur 9 dargestellten Lage, dank der Vorsehung der Langlöcher 31, wird es ermöglicht, das Bohrwerkzeug 18 in der dargestellten Bearbeitungslage festzulegen, unter Verwendung von schraubenartigen Bauteilen (nicht dargestellt).

Die Verschwenkbewegung der Platte 31 kann sowohl nach links als auch nach rechts um die Achse Z erfolgen.

Figur 10 zeigt im Schnitt die Werkzeugaufnahme mit dem Bohrwerkzeug 18, das von der Vorrichtung 19 aufgenommen ist und radial gegenüber der Längsachse der Vorrichtung versetzt ist.

## Patentansprüche

1. Werkzeugaufnahmekopf (1) für eine Drehmaschine, verschiebbar gelagert unter Einsatz einer Schwalbenschwanzführung (17),
**dadurch gekennzeichnet,**
**dass** der Aufnahmekopf (1) einen steuerbaren Motor (2) aufweist, dessen Antriebswelle (7) über ein Verbindungsstück (3) auf einen Schnellanschluss (4) einwirkt, dem eine Hydraulikbremse (5) zugeordnet ist und der Schnellanschluss (4) eine Aufnahme (6) für ein sich drehendes Werkzeug bzw. eine Lagerung zur Aufnahme eines fest angeordneten Werkzeuges (8) aufweist, wobei der Motor (2), die Antriebswelle (7), das Verbindungsstück (3), der Schnellanschluss (4), sowie die Hydraulikbremse in Reihe entlang einer gemeinsamen Längsachse angeordnet sind.

2. Werkzeugaufnahmekopf, nach Patentanspruch 1, **dadurch gekennzeichnet, dass** der Schnellanschluss (4) eine Aufnahme (6) aufweist, die mit einem Bohrwerkzeug (18, 16) bestückbar ist.

3. Werkzeugaufnahmekopf, nach Patentanspruch 1, **dadurch gekennzeichnet, dass** die Aufnahme (6) mit einem Bohrwerkzeug (18) ausgerüstet ist, das um 90° gegenüber der Achse (X) des Aufnahmekopfes (1) versetzt angeordnet ist.

4. Werkzeugaufnahmekopf, nach Patentanspruch 1, **dadurch gekennzeichnet, dass** die Vorrichtung (19) zur Aufnahme des Bohrwerkzeuges (18) zur Durchführung von radial gegenüber dem Werkstück versetzten Bohrungen als auch zur Durchführung von Bohrungen in Übereinstimmung mit der Achse des Werkstückes sowohl zur Durchführung von Bohrungen außerhalb der Achse als auch von Bohrungen radial gegenüber dem Werkstück (P) ausgerüstet ist.

5. Werkzeugaufnahmekopf, nach Patentanspruch 1, **dadurch gekennzeichnet, dass** das Bohrwerkzeug (18) durch in seiner Lage einstellbare Mittel von einer um die Achse (Z) verschwenkbaren Platte aufgenommen wird.

6. Werkzeugaufnahmekopf, nach Patentanspruch 1, **dadurch gekennzeichnet, dass** die Platte (30) von einem Bauteil aufgenommen wird, das in Umfangsrichtung eine Verzahnung aufweist, welche mit einem Antriebsrad in Verbindung steht, das mit einer Ausnehmung für das Einführen eines Einstellschlüssels ausgerüstet ist.

7. Werkzeugaufnahmekopf, nach Patentanspruch 6, **dadurch gekennzeichnet, dass** die Platte (30) Langlöcher (31) aufweist, um das Werkzeug (18), in ausgewählter Lage, unter Verwendung von Schrauben zu spannen.

## Claims

1. Tool-holding head (1) for a lathe, mounted displaceably using a dovetail guide (17), **characterized in that** the holding head (1) has a controllable motor (2), whose drive shaft (7) acts on a quick-release connection (4) via a connecting piece (3), wherein a hydraulic brake (5) is associated with the quick-release connection, and the quick-release connection (4) has a holder (6) for a rotating tool or a bearing for holding a tool (8) arranged fixedly, the motor (2), the drive shaft (7), the connecting piece (3), the quick-release connection (4) and the hydraulic brake being arranged in series along a common longitudinal axis.

2. Tool-holding head according to Patent Claim 1, **characterized in that** the quick-release connection (4) has a holder (6), which can be equipped with a drilling tool (18, 16).

3. Tool-holding head according to Patent Claim 1, **characterized in that** the holder (6) is equipped with a drilling tool (18), which is arranged offset through 90° with respect to the axis (X) of the holding head (1).

4. Tool-holding head according to Patent Claim 1, **characterized in that** the apparatus (19) for holding the drilling tool (18) is designed to perform drilling operations, offset radially with respect to the workpiece, and to perform drilling operations coincident with the axis of the workpiece and to perform drilling operations outside the axis and drilling operations radially with respect to the workpiece (P).

5. Tool-holding head according to Patent Claim 1, **characterized in that** the drilling tool (18) is held by a plate capable of pivoting about the axis (Z) by positionally adjustable means.

6. Tool-holding head according to Patent Claim 1, **characterized in that** the plate (30) is held by a component part, which has a toothed portion in the circumferential direction which is connected to a drive wheel, which is equipped with a cutout for inserting an adjusting key.

7. Tool-holding head according to Patent Claim 6, **characterized in that** the plate (30) has slots (31) in order to clamp the tool (18) in a selected position using screws.

## Revendications

1. Tête de réception d'outil (1) pour un tour, montée de manière déplaçable en utilisant un guide en queue d'aronde (17),
**caractérisée en ce que**
la tête de réception (1) présente un moteur commandable (2) dont l'arbre d'entraînement (7) agit par le biais d'une pièce de liaison (3) sur un raccord rapide (4) auquel est associé un frein hydraulique (5), et le raccord rapide (4) présente un logement (6) pour un outil rotatif ou un support sur palier pour recevoir un outil disposé fixement (8),
le moteur (2), l'arbre d'entraînement (7), la pièce de liaison (3), le raccord rapide (4) ainsi que le frein hydraulique étant disposés en rang le long d'un axe longitudinal commun.

2. Tête de réception d'outil selon la revendication 1, **caractérisée en ce que** le raccord rapide (4) présente un logement (6) qui peut être garni d'un outil de perçage (18, 16).

3. Tête de réception d'outil selon la revendication 1, **caractérisée en ce que** le logement (6) est muni d'un outil de perçage (18) qui est disposé de manière décalée de 90° par rapport à l'axe (X) de la tête de réception (1).

4. Tête de réception d'outil selon la revendication 1, **caractérisée en ce que** le dispositif (19) pour recevoir l'outil de perçage (18) est équipé pour effectuer des perçages décalés radialement par rapport à la pièce ainsi que pour réaliser des perçages en coïncidence avec l'axe de la pièce ainsi que pour réaliser des perçages à l'extérieur de l'axe ainsi que pour réaliser des perçages radialement par rapport à la pièce (P).

5. Tête de réception d'outil selon la revendication 1, **caractérisée en ce que** l'outil de perçage (18) est reçu par le biais de moyens ajustables dans sa position par une plaque pouvant pivoter autour de l'axe (Z).

6. Tête de réception d'outil selon la revendication 1, **caractérisée en ce que** la plaque (30) est reçue par un composant qui présente, dans la direction périphérique, une denture qui est en liaison avec une roue d'entraînement, qui est munie d'un évidement pour l'insertion d'une clé d'ajustement.

7. Tête de réception d'outil selon la revendication 6, **caractérisée en ce que** la plaque (30) présente des trous oblongs (31) afin de serrer l'outil (18) dans la position sélectionnée, en utilisant des vis.
